# EUROPEAN PATENT APPLICATION

(11) **EP 1 014 738 A2**
(43) Date of publication of application: **28.06.2000**
(21) Application number: 99310243.3
(22) Date of filing: 20.12.1999
(51) Int. Cl.: H04Q 7/30, H04Q 11/04

(54) **A method and apparatus for efficient bandwith usage in a packet switching network**

(30) Priority: 22.12.1998 US 218774
(71) Applicant: NORTEL NETWORKS CORPORATION, Montreal, Quebec H2Y 3Y4 (CA)
(72) Inventor: Tseng, Yichyun, Plano, Texas 75025 (US)
(74) Representative: Dearling, Bruce Clive

(57) **Abstract**

A universal CODEC, in one implementation, comprised of multiple CODECs in a bank, each CODEC capable of encoding/decoding speech transmissions in a different format, replaces a customary installation of two CODECs in a BSC/MSC. Within the universal CODEC, a bypass feature is incorporated that is capable of automatically selecting the individual CODEC having a format that is appropriate to a received signal. A BSC/MSC with a universal CODEC may receive any encoded voice signal and convert to the format appropriate to the receiving BSC/MSC. A second implementation of the universal CODEC utilizes multiple software applications and shares a common digital signal processor (DSP) core. Utilizing an automatic bypass feature and low frequency, in-band signals, the universal CODEC provides means to consume less bandwidth while transmitting speech signals only in compressed format through packet switching networks.

## Description

### FIELD OF THE INVENTION

The present invention relates in general to a method and apparatus for transmitting digitized voice signals via radio wave, and in particular to compressed voice signals between wireless terminals of a communications network. More particularly, the present invention relates to a reduction of bandwidth for transmitting and receiving wireless calls. Still more particularly, the present invention relates to selective conversion of encoded voice transmissions.

### BACKGROUND OF THE INVENTION

CODEC (generally understood to stand for COder/DECoder) is a term for a device that converts analog speech waveforms into digital signals and turns the digital signals into numerically compressed signals. The digital input signals can be recovered through a decoder, which applies a inverse process of the aforementioned numerical process. CODECs usually also include an encoder stage that will accept as input a digitized voice signal and output a compressed and encoded signal (e.g. a compression ratio of 8:1 is possible) for transmission. The CODEC also includes a decoder stage that accepts the compressed and encoded speech signal and outputs a digitized speech signal in decompressed form, such as in PCM samples. CODECs are utilized in wireless communication networks where the rapid growth in diversity and number of users is increasing the number of instances where two or more CODECs are utilized in tandem to serve one connection.

Pulse Code Modulation (PCM) is an example of a method of digitizing voice signals. There are other techniques such as Pulse Amplitude Modulation (PAM) or Delta Modulation. However, PCM is generally considered the standard and will be referred to as the input and output format for the CODEC though no limitation to the format is intended by the present invention.

For a typical mobile (cellular telephone) to mobile call in a digital cellular system, there are two encoding and decoding processes before a subscriber's speech signal entered one mobile may be received by another subscriber's mobile and heard by the subscriber. In many wireless communication networks, a first CODEC, integrated into a first mobile terminal, is used to compress the speech of a first mobile user. The compressed speech is transmitted by Radio Frequency (RF) equipment to a base station controller (BSC) and a mobile switching center (MSC) serving the first mobile terminal. Either the BSC or the MSC (hereinafter referred to as BSC/MSC since the CODEC may reside in either) has a second CODEC, depending on the wireless system (i.e. TDMA, CDMA, and GSM etc.), which decompresses the received compressed signal into PCM sampled signals. The PCM signals are transmitted over a digital link of the network, such as a public switched telephone network (PSTN), to a second BSC/MSC serving a second mobile terminal. A third CODEC at the second BSC/MSC then re-compresses the PCM samples for RF transmission to the second mobile terminal. A fourth CODEC integrated into the second mobile terminal then decompresses the received compressed speech signal in order to synthesize the original speech signal from the first mobile terminal. Such an arrangement of multiple CODECs is commonly referred to as "tandem" CODECs which serve a single connection. A specific example of tandem CODECs may involve a call within the same wireless system such as the North American TDMA (Time Division Multiple Access) or from a wireless terminal operating according to the North American TDMA system to a European standard Global System for Mobile (GSM) mobile phone. The main advantage of compressing speech for RF transmission is less of the limited available RF channel bandwidth is utilized for transmission, while the main disadvantage is the loss of speech quality. Operating tandemed CODECs significantly degrades the voice quality of speech, thus providing the desire to limit the number of times that speech is compressed and decompressed in a single connection, i.e., between two mobile users. Moreover, since transmission of speech in PCM format consumes much larger bandwidth than the compressed speech format, it is desired to have a means to transmit compressed speech to efficiently use the bandwidth in a link in the, but not limited to, PSTN.

As disclosed in commonly assigned international application PCT 95CA704 there is disclosed a method to eliminate the condition of tandem CODECs through a method called tandem free operation (TFO). TFO is defined as a CODEC bypass action if the CODECs in both terminals are the same, for example, both terminals utilize GSM CODECs. TFO is also defined as using a common format across the transport network if the CODECs at each terminal are different, e.g. a GSM terminal on one end and a CDMA (Code Division Multiple Access) terminal on the other. The basic idea behind this approach is the provision of a digital signal processor including a CODEC, and a bypass mechanism that is invoked when the incoming signal is in a format compatible with a downstream CODEC. Through signaling and control, a digital signal processor (DSP) associated with the first BSC/MSC serving the first mobile terminal determines that a compatible CODEC resides at a second BSC/MSC serving a second mobile terminal. In such a case, the first DSP associated with the first BSC/MSC, rather than converting compressed speech signals into a digital signal, i.e. using a PCM format, invokes the bypass mechanism and outputs the compressed speech to the transport network. The second DSP associated with the second BSC or MSC receives the compressed speech from the transport network and also invokes the bypass mechanism. Compression of the digitized speech signal occurs only once, at the first mobile terminal, and decompression of the compressed speech signal occurs only once, at the second mobile terminal. The contents of this international application are incorporated herein by reference.

A method has been disclosed to identify the capability of wireless network equipment to facilitate TFO in a wireless communication system. A signal, preferably a low frequency digital tone, is generated and transmitted on a voice channel between elements (BSC/MSC) of a communication network to identify the capabilities of the terminating communication element. The low frequency digital tone is initiated by the terminating communication element. An originating communication element detects and responds to the signal (tone) by disabling network echo cancellers between the originating element and the terminating element in the forward direction. The terminating element detects and responds to such disabling of the network echo cancellers by disabling network echo cancellers between the terminating element and the originating element in the backward direction.

The digital tone is only utilized a few tenths of a millisecond, and does not have enough energy to irritate a caller. The low frequency tone is generated by a tone generator at the terminating element of the network. Tone detection circuitry at the originating element taps into the voice channel and utilizes a band pass filter (BPF) to separate the tone from the rest of the signal/noise. The energy out of the BPF is tested against a preset threshold level to determine whether or not the tone is present. A CODEC bypass/smart transcoding control circuit at the originating element responds according to the output of the tone detection circuitry. An echo canceller disable tone generator responds to the output of the CODEC bypass control circuit by disabling network echo cancellers between the originating element and the terminating element in the forward direction when the tone is detected. The terminating element detects the disabling of network echo cancellers and in turn disables the network echo cancellers between the terminating element and the originating element in the backward direction. Tones having different frequencies may be sent by the terminating element and received by the originating element to identify capabilities of the originating and terminating elements, to facilitate TFO. A low frequency acknowledge tone is sent by the originating terminal to establish TFO cross-transcoding. The contents of this U.S. application are incorporated herein by reference.

TFO provides a system for saving bandwidth and reducing distortion caused by processing voice signals through multiple CODECs. In systems with terminals equipped with different low bit-rate CODECs, for example GSM and CDMA systems, there is still distortion between different systems caused by the conversion between the universal PCM format to and from the GSM and CDMA formats and the required transmission in PCM format, which requires larger bandwidth, compared with the compressed format.

It would be desirable to provide a method and system that would utilize transmission bandwidth more efficiently between two switching nodes for packet switching networks, thus increasing system capacity. It would further be desirable to reduce the encoding and decoding steps involved in transmissions between packet switching networks. It would also be desirable to reduce the cost involved in communicating between CODECs in identical networks and/or different communication networks.

### SUMMARY OF THE INVENTION

A universal CODEC, in one implementation, comprised of multiple CODECs in a bank, each CODEC that is capable of encoding/decoding speech transmissions in a different format and is implemented with multiple digital signal processor (DSP) cores, replaces a customary installation of a single CODEC in a BSC/MSC. Within the universal CODEC, a bypass control feature is incorporated that is capable of automatically selecting the individual CODEC having a format that is appropriate to a received signal. A BSC/MSC with a universal CODEC may receive any encoded voice signal and convert to the compressed format appropriate to the receiving BSC/MSC and the receiving terminal. A second implementation of the universal CODEC is a "soft" CODEC, utilizing multiple software applications and sharing a common DSP core. Utilizing an automatic bypass feature and low frequency, in-band signals, the universal CODEC may bypass the encoded input signal from the first mobile station if both mobile stations use the same type of CODEC; or route incoming signals to the appropriate decoder in the universal CODEC and the received voice signal is then decompressed into the digital PCM format first and re-encoded according to the CODEC type of the receiving mobile. The encoded speech, which is in the format understandable by the other mobile station, instead of the high bandwidth PCM signal, is then transmitted across the network to save bandwidth.

In a first aspect of the present invention there is provided a universal CODEC, comprising:
a plurality of speech encoders, for encoding and decoding digitized speech transmissions to and from a Base Station Controller/Mobile Switching Center (BSC/MSC), coupled to a speech input and to an output connected to a packet switching network, wherein each said encoder comprises:
an encoder software application for a specific wireless communication protocol; and
a Digital Signal Processor (DSP) core for processing said application, wherein said core may include multiple DSPs;
a bypass control for routing encoded speech through a system specific CODEC or through one of said plurality of speech encoders; and
an encoder selector for determining an appropriate encoder from among said plurality of speech encoders and said system specific CODEC.

In another aspect of the present invention there is provided a method for reducing bandwidth and improving voice quality in a wireless communication network, comprising the steps of:
receiving a digitized speech transmission into a CODEC bypass control within a first BSC/MSC;
said bypass control regulated by a Tandem Free Operation (TFO) detection device, routing said transmission to a universal encoder or to a system specific CODEC;
encoding said transmission in a wireless communication format identical to that of a second BSC/MSC;
sending said transmission to a TFO control for transmission;
initiating a TFO process by sending a low frequency signaling tone to said second BSC/MSC;
transmitting said encoded transmission to a second BSC/MSC via radio frequency equipment across said wireless communication network.

In yet another aspect of the present invention there is provided a universal CODEC, comprising:
at least two speech CODECs, sharing a common Digital Signal Processor (DSP) core, coupled to a speech input and to an output connected to a communication network, wherein each speech CODEC comprises, in addition to said common DSP core, multiple encoder software applications, for communication protocols selectively executable within said second encoder; and a controller for selecting an appropriate encoder.

The present invention advantageously reduces bandwidth of transmissions between switching nodes of different wireless communication systems. Beneficially, the present invention provides a method and system that converts voice transmissions from one format to another format in a packet switching network without being transmitted in PCM format. Furthermore, the present invention provides a cost-effective method to communicate equally well between CODECs in matched systems (such as GSM to GSM) and in different systems (such as CDMA to GSM).

### BRIEF DESCRIPTION OF THE DRAWINGS

The novel features believed characteristic of the invention are set forth in the appended claims. The invention itself however, as well as a preferred mode of use, and further advantages thereof, will best be understood by reference to the following detailed description of an illustrative embodiment when read in conjunction with the accompanying drawings, wherein:
**Figure 1** depicts a wireless communication system in which a preferred embodiment of the present invention may be implemented;
**Figure 2** illustrates an encoder bank in accordance with a preferred embodiment of the present invention;
**Figure 3** depicts a "soft bank" encoder in accordance with a preferred embodiment of the present invention.
**Figure 4** illustrates a high-level flow diagram of a method for utilizing a universal CODEC in transmitting encoded speech to the network in accordance with a preferred embodiment of the present invention.
**Figure 5** illustrates a high-level flow diagram of a method for utilizing a universal CODEC in receiving encoded speech from the network in accordance with a preferred embodiment of the present invention.

### DETAILED DESCRIPTION OF THE PREFERRED EMBODIMENT

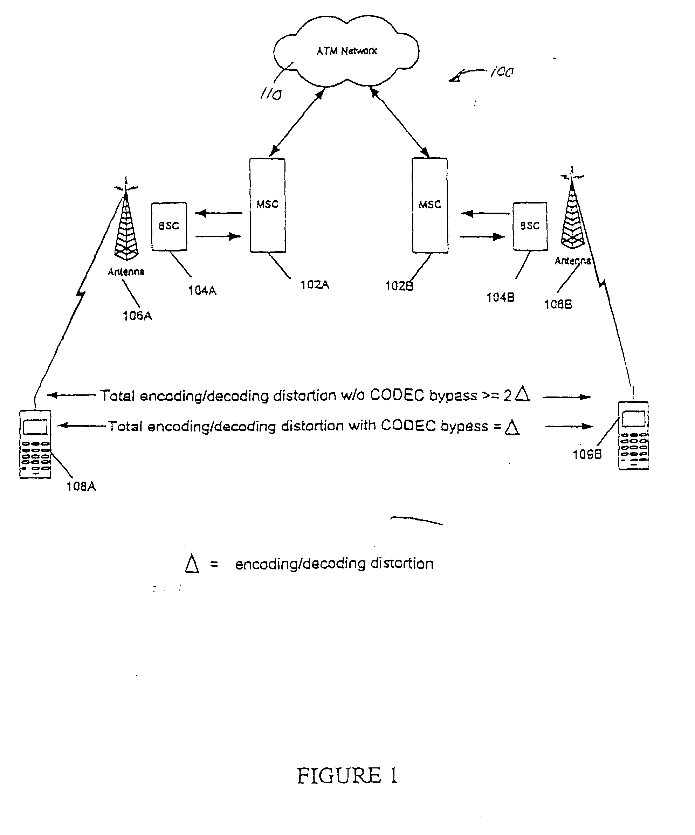

With reference now to the figures, and in particular with reference to **Figure 1**, a wireless communication system in which a preferred embodiment of the present invention may be implemented, is depicted. System **100** comprises a plurality of mobile switching centers (MSCs) **102**, each MSC servicing and in communication with a plurality of base station controllers (BSCs) **104**. Each BSC **104** has an associated antenna station **106** for RF wireless communication with a plurality of mobile terminals (MTs) **108**. Communication of digitized voice calls between an originating MSC **102** and a terminating MSC **102**, may be established through a packet switching network (e.g., Asynchronous Transmission Network (ATM)) **110**. In a typical wireless communication system **100**, there are multiple MSCs **102**, and multiple BSCs **104** serviced by each MSC **102**. For purposes of clarity and illustration of the present invention, there is shown in **Figure 1**, an originating BSC **104A** and MSC **102A** servicing an originating mobile terminal **108A** and a terminating BSC **104B** and MSC **102B** servicing a terminating mobile terminal **108B**.

In conventional mobile communication systems, a CODEC (not shown) is provided, integrally, in each mobile terminal **108**, and in each of either the BSC or MSC, depending on the type of communication system being employed (GSM, TDMA, etc.). For some TDMA systems, a CODEC (not shown) is provided in the MSC, while in GSM systems a CODEC (not shown) may be provided in the BSC. The CODEC provided in mobile terminal **108A**, compresses digitized voice for transmission to the respective BSC **104A** in a format such as Enhanced Full Rate Codec (EFRC). A CODEC is provided in either the BSC **104A** or the MSC **102A** to decompress a received voice signal into a digitized format, such as Pulse Code Modulation (PCM). Digitized voice signals are then transmitted over packet network **110** to the terminating MSC **102B**, and again compressed by a CODEC in either MSC **102B** or BSC **104B**, depending on the particular system, for wireless transmission to receiving mobile terminal **108B**. The CODEC at mobile terminal **108B** decompresses the received voice signal into the digital PCM format, which is then converted into an audio signal for reception by mobile terminal **108B** user.

Compressing speech utilizes less of the available channel bandwidth for transmission. However, the main disadvantage to speech compression is loss of speech quality. Most modern low bit-rate CODECs are based on a linear prediction model that separates the speech signal into a set of linear prediction coefficients, a residual signal and various other parameters. Generally, the speech may be reconstructed from these components with good quality. However, degradations are introduced when a speech signal is subjected to multiple CODECs. Each time a voice signal is compressed (encoded) and then decompressed (decoded), there is an associated voice quality (VQ) loss. CODECs discard some voice signal information to achieve compression. Each encoding and decoding procedure is represented by the delta symbol in **Figure 1**. In a conventional system where voice signals are communicated between two (2) mobile terminals, there may be a total voice quality loss of two Delta between mobile terminal **108A** and mobile terminal **108B** when CODECs at MSCs **102A** or the BSCs **104A** are not bypassed.

In commonly assigned International Application PCT 95CA704 filed December 19, 1995, there is disclosed a "bypass" approach to achieve TFO whereby a bypass mechanism is invoked to bypass CODECs at the BSC/MSC, at both the originating and terminating end of the communication systems. This bypass mechanism is invoked when the digital signal processor associated with a first originating base station is identical to the digital signal processor at a receiving second base station. That is, tandem free operation of CODECs is achieved by transmitting compressed voice signals over a packet network, when the digital signal processors at each base station are identical. The mobile terminals can decompress voice signals originated by the other mobile terminal without passing through tandem CODECs. The teachings of this commonly assigned PCT application is incorporated herein by reference.

European Patent Application No. 97911986.4, entitled "Method And Apparatus For Improving The Voice Quality Of Tandemed Vocoders", filed June 26, 1997, there is disclosed a method and apparatus to achieve TFO by converting compressed speech signals from one format to another intermediate common format (CF) when the vocoders (CODECs) of the originating and terminating mobile terminals are not identical. This method and apparatus provides cross transcoding, also known as smart transcoding, and provides a means to avoid the necessity of successively decompressing voice data to a PCM format, and then recompressing the voice data, which degrades the quality of the transmitted speech signals. A modified compressed voice signal, i.e. common format signal, is transmitted over the PSTN, and the CODECs at the BSC/MSC, at the terminating end and originating end of the communication system, are bypassed to achieve tandem free operation.

There has also been proposed a method and apparatus whereby compressed or modified, compressed voice signals are exchanged over a transport network such as the PSTN or ATM, and compression/decompression is only performed by the CODECs at the terminal elements or network access elements. The present invention significantly improves the voice quality of the call by eliminating the successive compression/decompression of voice signals. Additionally, conventional tandem voice encoding is engaged when CODECs of the terminal elements or network access elements are incompatible (tandem voice encoding is required in this instance).

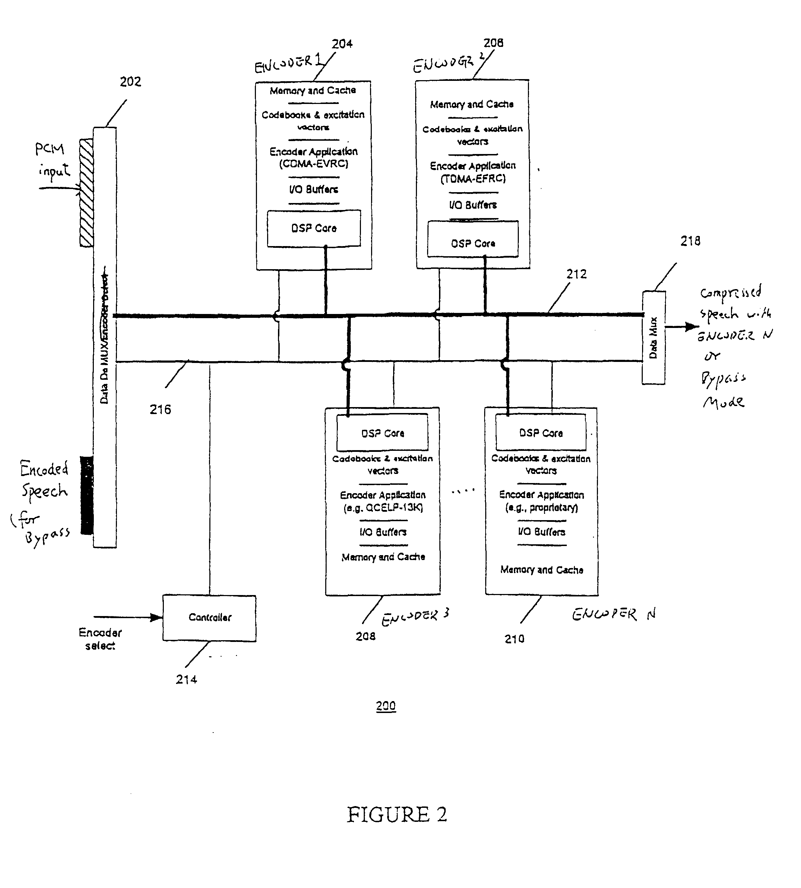

Referring now to **Figure 2**, an encoder/decoder bank (universal CODEC) in accordance with the present invention, is illustrated. The hardware implementation of the CODEC bank **200** ("hard-bank") is an implementation of the universal CODEC. It utilizes individual CODECs, each implemented with a DSP core, memory, and programs stored in the memory, to jointly provide multiple wireless communication format conversion within one universal CODEC. The hard-bank is comprised of a speech CODEC **202**, which can either receive the PCM format speech waveform, which is generated by sampling analog input speech at a rate of 8000 times per second, with each sample being eight bits (64,000 or 64k bits per second) and encoded and compressed to a predefined reduce rate format, e.g. EVRC at 8kbps. The encoding or decoding function of the CODEC is predetermined during the system setup. In general, the universal CODEC is used as a encoder if the output of the universal CODEC is transmitted toward PSTN or packet switching networks; while it is used as an decoder if it receives speech signals from the network and transmit the output toward the mobile station. CODECs **204, 206, 208** and **210** represent different CODEC within the hard-bank universal CODEC. When it is used as encoder, each encoder is capable of handling a single format conversion for an incoming PCM speech signal. For example, if the MSC/BSC serving the mobile station A detects a signal indicating from the other BSC/MSC, serving mobile station B, that it is a CDMA system utilizing Enhanced Variable Rate CODECs (EVRC), the BSC/MSC A will first utilize its default CODEC outside the universal CODEC to convert the incoming encoded speech into PCM format. The BSC/MSC A will then instruct the CODEC controller **214** to select CODEC **204** through control bus **216** to convert the converted PCM signal received from mobile station A to an EVRC format for transmission through the DeMultiplexer **202** and line interface **218** to the network. On the receiving side, the EVRC encoded speech from mobile station B will be routed to the universal CODEC at the receiving side of the MSC/BSC A to decode the speech into a PCM format. The PCM speech will then be re-encoded through the default CODEC of the BSC/MSC A, which resides outside the universal CODEC, to a format that is recognized by mobile station A and transmitted through air interface to be received and decoded by mobile station A.

The incoming signal is preceded by a low frequency tone, in the case of TFO, identifying the transmitting system. An acknowledge signal, TFO_ACK, precedes an ID signal as described in the table below.

| **Low Frequency Signaling Scheme for TFO** | |
|---|---|
| Tone Frequency | Access Method and TFO capable |
| 100 Hz | TFO-ACK |
| 35 Hz | CODEC_TYPE1 (e.g. GSM-EFRC) |
| 45 Hz | CODEC_TYPE2 (e.g. TDMA-EFRC) |
| 80 Hz | CODEC_TYPE1 (e.g. CDMA-EVRC) |
| 170 Hz | CODEC_TYPE1 (e.g. GSM, Half Rate) |
| 190 Hz | CODEC_TYPE1 (e.g. TDMA-VSELP) |
| 220 Hz | TFO_NAK |

As indicated above the tone frequency identifies the system that is transmitting the signal thus allowing controller **214** to switch the incoming signal to encoder **204**. Controller **214** switches, automatically, the user's encoded speech from DeMultiplexer **202** to encoder **204** or bypass for transmission via data bus **212**, Data Multiplexer **218** and a packet switching network (not shown) to the original transmitting system.

Regardless of the system transmitting to the hard-bank universal encoder, controller **214** selects the appropriate CODEC to convert incoming and outgoing wireless communication signals. Additionally, the speech transmission is compressed (8:1 ratio) which increases bandwidth efficiency in the system.

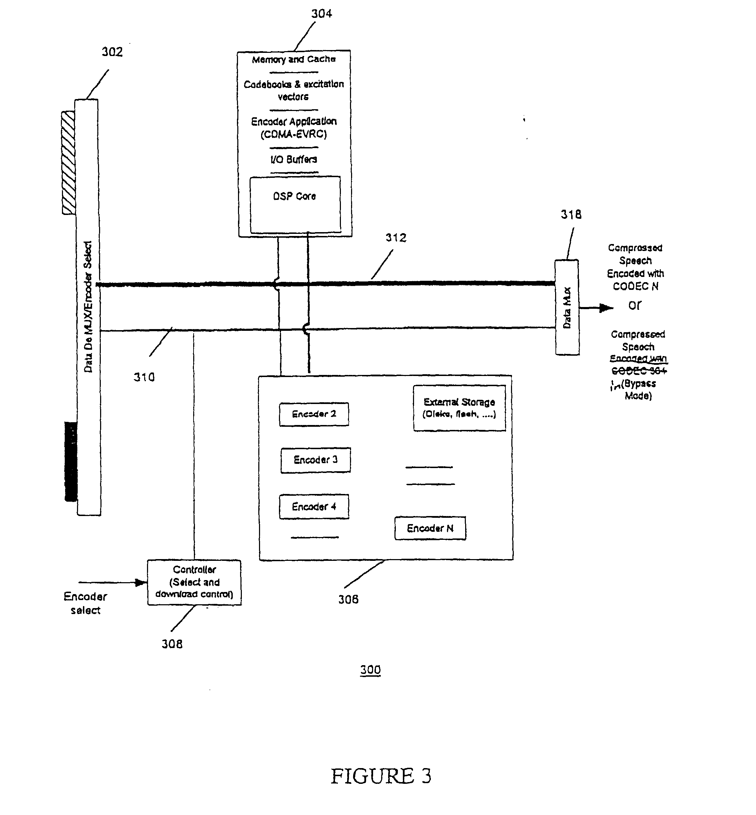

Referring to **Figure 3**, a "soft-bank" universal CODEC in accordance with the present invention, is depicted. Soft-bank universal CODEC **300** is comprised of Data DeMultiplexer **302** to provide a path of either PCM or encoded speech; a DSP core **304** with memory for program space. Several versions of the codec programs are stored in program storage **306**. The software program of a codec can be loaded through the data bus **312** under the control of the controller **308** via the control bus **310**. The encoded speech, either the encoded input through DeMultiplexer **302** or the output of the codec, which consists the results out of the DSP core, are passed to Data Multiplexer **318** for transmission. The program storage **306** consists a non-volatile memory device that maintains the software applications. Encoder software applications (Encoder 3, Encoder 4, Encoder N, etc.) utilize the same DSP core **304**. When a TFO signal is detected, if the incoming type is not the receiving system's type, controller **308** notes the type of incoming encoded signal and automatically downloads the appropriate program to convert the incoming PCM signal and generate encoded compressed speech for output. As shown in **Figure 3**, compressed speech encoded with CODEC N (software application) executed with DSP core **304,** depending on the format of the receiving BSC/MSC (not shown), is transmitted via Data Multiplexer **318** to a transport network (ATM, PSTN, etc.) and on to a receiving mobile terminal (not shown).

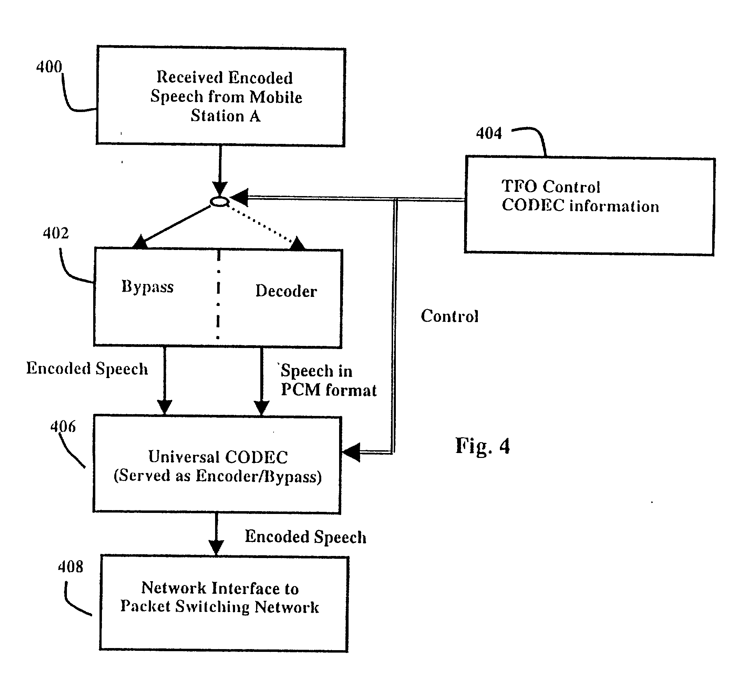

Referring to **Figure 4**, a high-level flow diagram, in accordance with a preferred implementation of the present invention being used as in a transmitting process, is illustrated. The process begins at step **400**, which depicts encoded speech, from a mobile station being received at the serving BSC/MSC. The process proceeds to step **402**, which a decoding or bypass process controlled by the TFO control process **404**. Should 404 detect a Tandem Free Operation inband signal, transmitted by the remote BSC/MSC serving the other mobile station, identifying that both systems use the identical CODEC, the output of step **400**, which is an encoded speech received from the mobile station, is bypassed through **402** and sent to network interface **408**; otherwise, the output of step **400** is decoded by the decoder **402** and the output of **402**, in PCM form, is fed into the universal CODEC **406**. Step **406** is also controlled by **404**, which passes the CODEC information of the remote BSC/MSC as the input of the controller **214** or **308** shown in **Figure 2** and **Figure 3** according to the hard-bank or soft-bank implementation respectively. The encoded speech output from **406** is then sent to network interface **408** and to the packet switching network. In this case, only the encoded and compressed speech signal will be transmitted across the network and decoded by the other mobile station.

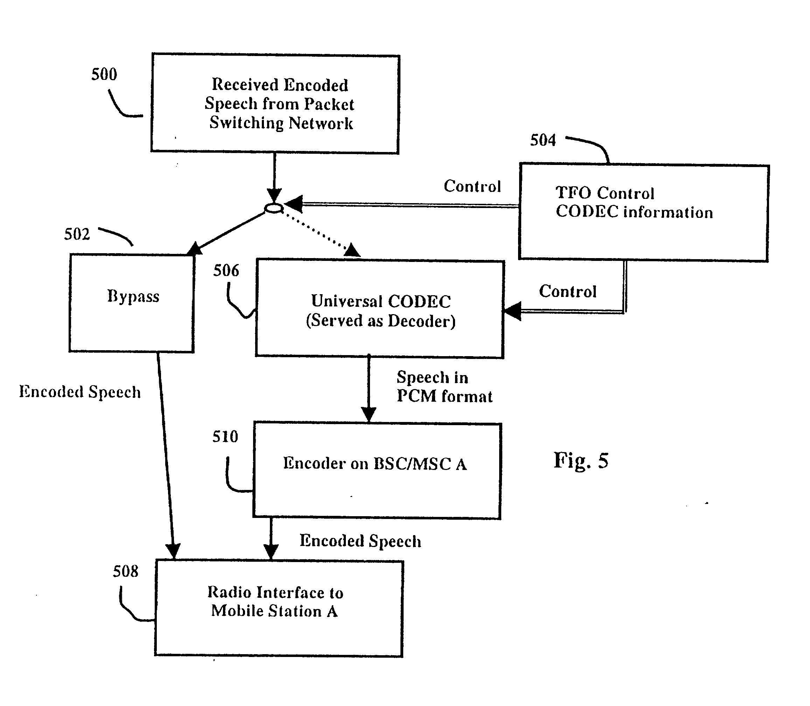

Referring to **Figure 5**, a high-level flow diagram, in accordance with a preferred implementation of the present invention being used as in a receiving process, is illustrated. The process begins at step **500**, which depicts encoded speech, transmitted by a remote mobile station B through the packet switching network and received by the BSC/MSC A serving the mobile station A. The process proceeds to step **502**, which a decoding bypassing process controlled by the TFO control process **504**. Should **504** detect a Tandem Free Operation inband signal, transmitted by the remote BSC/MSC serving the mobile station B, identifying that both systems use the identical CODEC, the output of step **500**, which is an encoded speech received from the mobile station B, is bypassed through **502** and sent to radio interface **508** and transmitted to mobile station A; otherwise, the output of step **500** is decoded by the universal CODEC **506** and the output of **506,** in PCM form, is fed into the codec on BSC/MSC A **510**. Step **506** is also controlled by **504**, which passes the CODEC information of the remote BSC/MSC as the input of the controller **214** or **308** shown in Figure 2 and 3 according to the hard-bank or soft-bank implementation respectively. The encoded speech output from **504** is then sent to radio interface **508** and transmitted to mobile station A. In this case, only the encoded and compressed speech signal will be transmitted across the network and decoded by the other mobile station.

While the invention has been particularly shown and described with reference to a preferred embodiment, it will be understood by those skilled in the art that various changes in form and detail may be made therein without departing from the scope of the invention.

## Claims

1. A universal CODEC, comprising:
a plurality of speech encoders, for encoding and decoding digitized speech transmissions to and from a Base Station Controller/Mobile Switching Center (BSC/MSC), coupled to a speech input and to an output connected to a packet switching network, wherein each said encoder comprises:
an encoder software application for a specific wireless communication protocol; and
a Digital Signal Processor (DSP) core for processing said application, wherein said core may include multiple DSPs;
a bypass control for routing encoded speech through a system specific CODEC or through one of said plurality of speech encoders; and
an encoder selector for determining an appropriate encoder from among said plurality of speech encoders and said system specific CODEC.

2. The CODEC of claim 1, wherein said encoder software application for a specific communication protocol, further comprises;
a complete voice coder/decoder and compression application present in non-volatile memory onboard said encoder.

3. The CODEC of claim 1 or 2, wherein said DSP core for processing said application, comprises either a single high speed, high capacity DSP, or multiple high speed DSPs.

4. The CODEC of claim 1, 2 or 3 wherein said bypass control for routing encoded speech through a system specific CODEC or through one of said plurality of speech encoders, further comprising:
a communication path from said TFO receiver controller for enabling said bypass control to select a system specific encoder or a matching encoder either within said universal encoder.

5. A method for reducing bandwidth and improving voice quality in a wireless communication network, comprising the steps of:
receiving a digitized speech transmission into a CODEC bypass control within a first BSC/MSC;
said bypass control regulated by a Tandem Free Operation (TFO) detection device, routing said transmission to a universal encoder or to a system specific CODEC;
encoding said transmission in a wireless communication format identical to that of a second BSC/MSC;
sending said transmission to a TFO control for transmission;
initiating a TFO process by sending a low frequency signaling tone to said second BSC/MSC;
transmitting said encoded transmission to a second BSC/MSC via radio frequency equipment across said wireless communication network.

6. The method of claim 5 further comprises:
detecting the presence of a TFO signal from said second BSC/MSC; and
utilizing information provided by said TFO signal to determine whether to route said transmission to said system specific CODEC or said universal encoder.

7. The method of claim 5 or 6, wherein encoding said transmission in a wireless communication format identical to a that of a second BSC/MSC, further comprises
compressing said transmission utilizing an eight to one compression ratio.

8. The method of claim 5, 6 or 7, wherein initiating said TFO process by sending a low frequency signaling tone to said second BSC/MSC, further comprises:
utilizing said signaling tone to indicate TFO capability;
responsive to said signaling tone, said second BSC/MSC transmitting an acknowledge signal, to said first BSC/MSC, followed by a second low frequency tone indicating a CODEC type that said second BSC/MSC proposes for communication;
negotiating between said first and second BSC/MSC until both agree upon one CODEC for communication;
commencing TFO operation if said first and second BSC/MSC agree upon a common CODEC.

9. A universal CODEC, comprising:
at least two speech CODECs, sharing a common Digital Signal Processor (DSP) core, coupled to a speech input and to an output connected to a communication network, wherein each speech CODEC comprises, in addition to said common DSP core, multiple encoder software applications, for communication protocols selectively executable within said second encoder; and a controller for selecting an appropriate encoder.
